# EUROPÄISCHE PATENTANMELDUNG

(11) **EP 1 298 418 A1**
(43) Veröffentlichungstag der Anmeldung: **02.04.2003**
(21) Anmeldenummer: 02018531.0
(22) Anmeldetag: 17.08.2002
(51) Int. Cl.: G01C 21/34, G08G 1/0969, H04H 1/00

(54) **Vorrichtung zum Empfangen, Aufzeichnen, Abspeichern und Wiedergeben von Informationen und/oder Signalen und allgemeine Zusatzinformationen**

(30) Priorität: 14.09.2001 DE 10145298
(71) Anmelder: ROBERT BOSCH GMBH, 70442 Stuttgart (DE)
(72) Erfinder: Musielak, Joerg, 32457 Porta Westfalica (DE); Groeger, Klaus-Erwin, 31199 Diekholzen (DE)

(57) **Zusammenfassung**

Um eine Vorrichtung (100) zum Empfangen, Aufzeichnen, Abspeichern und Wiedergeben von auf den Straßenverkehr bezogenen Daten (aaa), Informationen (bbb) und/oder Signalen (ccc) zu schaffen, bei der der Nutzwert der in der Vorrichtung (100) implementierten Speichereinrichtungen gesteigert ist, wird vorgeschlagen, die Speichereinheit (30, 32) zumindest bereichsweise oder zumindest teilweise für das Speichern von vorgegebenen oder vorbestimmten Daten (xxx), Informationen (yyy) und/oder Signalen (zzz) auszulegen, die zusätzlich zu den empfangenen und aufgezeichneten Daten (aaa), Informationen (bbb) und/oder Signalen (ccc) aus der Speichereinheit (30, 32) abrufbar sind.

## Beschreibung

### Technisches Gebiet

Die vorliegende Erfindung betrifft eine Vorrichtung zum Empfangen, Aufzeichnen, Abspeichern und Wiedergeben von insbesondere auf den Straßenverkehr bezogenen Informationen und/oder Zusatzinformationen in Form von Daten, Informationen und/oder Signalen, aufweisend
- mindestens eine Empfangseinheit zum Empfangen der Daten, Informationen und/oder Signale,
- mindestens eine mit der Empfangseinheit in Verbindung stehende Aufzeichnungseinheit zum Aufzeichnen der empfangenen Daten, Informationen und/oder Signale,
- mindestens eine mit der Aufzeichnungseinheit in Verbindung stehende Speichereinheit zum Abspeichern der aufzuzeichnenden Daten, Informationen und/oder Signale,
- mindestens eine mit der Aufzeichnungseinheit in Verbindung stehende optische und/oder vokale Wiedergabeeinheit zum - Wiedergeben der aus der Speichereinheit ausgelesenen Daten, Informationen und/oder Signale und
- mindestens eine mit der Empfangseinheit bzw. mit der Wiedergabeeinheit in Verbindung stehende Steuereinheit zum Steuern des Empfangens, Aufzeichnens, Abspeicherns und Wiedergebens der Daten, Informationen und/oder Signale.

### Stand der Technik

Im Innenraum eines Fortbewegungsmittels, insbesondere im Armaturenbrett oder im Cockpitmodul eines Kraftfahrzeugs, ist konventionellerweise eine Kommunikationseinrichtung, wie etwa ein Autoradio oder ein Navigationssystem, vorgesehen. Eine Reihe derartiger Kommunikationseinrichtungen bietet heutzutage die Möglichkeit, auf den Straßenverkehr bezogene Daten, Informationen und/oder Signale, kurz gesagt Verkehrsmeldungen, mittels der Kommunikationseinrichtung aufzuzeichnen und in der Kommunikationseinrichtung zu speichern, um sie zu einem späteren Zeitpunkt abrufen zu können.

Hierbei kommen als Bereitsteller oder Lieferanten für derartige Verkehrsmeldungen externe Quellen in Frage, wie beispielsweise Rundfunksender, die Verkehrsmeldungen über ihre RDS-Sender (RDS = Radio Data System = Radio-Daten-System) im RDS/TMC-Standard (TMC = Traffic Message Channel = Kanal für Verkehrsdurchsagen = Verkehrsfunkkanal mit automatisierter Erfassung der Verkehrslage und Aufbereitung entsprechender Verkehrsmeldungen) kodiert übertragen; des weiteren sind auch Serviceprovider denkbar, die Verkehrsmeldungen beispielsweise mit Hilfe des SMS-Dienstes (SMS = Short Message Service) des GSM-Netzes (GSM = Global System for Mobile Communication) übertragen oder programmbegleitende analoge Informationen (RDS-TP-Traffic Program-Verkehrsfunk.

Zu bedenken ist in diesem Zusammenhang allerdings, daß mit derartigen, als Kommunikationseinrichtungen bezeichenbaren Vorrichtungen bislang nur aktuell empfangene Daten, Informationen und/oder Signale aufgezeichnet, gespeichert und zu einem späteren Zeitpunkt abgerufen werden konnten, so daß der Nutzwert derartiger Speichereinrichtungen doch eher limitiert war.

### Darstellung der Erfindung: Aufgabe, Lösung, Vorteile

Ausgehend von den vorstehend dargelegten Nachteilen und Unzulänglichkeiten liegt der vorliegenden Erfindung die Aufgabe zugrunde, eine Vorrichtung der eingangs genannten Art so weiterzubilden, daß der Nutzwert der in der Vorrichtung implementierten Speichereinrichtungen gesteigert ist.

Diese Aufgabe wird durch eine Vorrichtung mit den im Anspruch 1 angegebenen Merkmalen gelöst. Vorteilhafte Ausgestaltungen und zweckmäßige Weiterbildungen der vorliegenden Erfindung sind in den Unteransprüchen gekennzeichnet.

Gemäß der Lehre der vorliegenden Erfindung können mittels der Vorrichtung zusätzlich zu den empfangenen und aufgezeichneten Daten, Informationen und/oder Signalen zumindest in Teilen der Speichereinheit auch vorgegebene oder vorbestimmte Daten, Informationen und/oder Signale gespeichert und aus der Speichereinheit abgerufen werden.

Die technischen Hintergründe für diese Innovation sind nicht zuletzt darin zu sehen, daß die Aufzeichnungsdauer bei der vorliegenden Erfindung nicht mehr durch die Größe des zur Verfügung stehenden Speichers begrenzt ist (dies war bei Vorrichtungen gemäß dem Stand der Technik der Fall), sondern daß sich vielmehr mit wachsenden Speichergrößen bei gleichzeitig räumlich miniaturisierten Speichereinheiten wesentlich mehr Möglichkeiten der Daten- und Informationsspeicherung ergeben.

In diesem Zusammenhang wird der Fachmann auf dem Gebiet der Kommunikationselektronik für Fortbewegungsmittel insbesondere als vorteilhaft zu schätzen wissen, daß in sämtlichen Geräteklassen insofern ein zusätzliches, beispielsweise bei Geräten mit Sprachspeicher vorzüglich nachweisbares "Feature" realisiert werden kann, insbesondere bei Geräten mit Traffic Information Memory-Funktion als die grundsätzliche Möglichkeit besteht, gegebene Anweisungen, Begrüßungen, Fixtexte, Wunschtexte oder dergleichen in der Speichereinheit abzulegen und dem Führer des Fortbewegungsmittels per optischer Anzeige oder auch per Sprachausgabe zur Kenntnis zu bringen, nämlich beispielsweise als Hinweise oder als Warnungen wiederzugeben.

In einer bevorzugten Ausgestaltungsform der vorliegenden Erfindung wird zur Sprachausgabe der vorgegebenen oder vorbestimmten Daten, Informationen und/oder Signale, und hierbei insbesondere zur Sprachausgabe von Fixtexten, mindestens ein Sprachaufzeichnungsmodul eingesetzt. Alternativ oder in Ergänzung hierzu kann in erfindungswesentlicher Weise der Speicherinhalt mindestens eines vorhandenen Speichermoduls oder Sprachaufzeichnungsmoduls so groß gewählt werden, daß neben der Sprach-Aufzeichnungskapazität ausreichend Platz für vorgegebene oder vorbestimmte Daten, Informationen und/oder Signale, und hierbei insbesondere für Fixtexte, zur Verfügung steht.

Gemäß einer besonders vorteilhaften Weiterbildung der vorliegenden Vorrichtung nutzen auch die Bereiche oder Teile der Speichereinheit, die erfindungsgemäß zum Speichern der vorgegebenen oder vorbestimmten Daten, Informationen und/oder Signale bestimmt sind, die gemeinsame Infrastruktur der Vorrichtung, das heißt insbesondere die ursprünglich nur. für den Sprachspeicher vorgesehene Steuereinheit sowie die Wiedergabeeinheit. Nicht zuletzt aus diesem Grunde ist die Qualität der Aus- bzw. Wiedergabe der vorgegebenen oder vorbestimmten Daten, Informationen und/oder Signale identisch oder nahezu identisch mit der sogenannten digitalen SprachwiedergabeQualität, das heißt mit der Aus- bzw. Wiedergabe der von außerhalb empfangenen und aufgezeichneten Daten, Informationen und/oder Signale.

Die vorliegende Erfindung betrifft schließlich die Verwendung von zumindest Teilen mindestens einer einer Vorrichtung zum Empfangen, Aufzeichnen, Abspeichern und Wiedergeben von auf den Straßenverkehr bezogenen Daten, Informationen und/oder Signalen zugeordneten Speichereinheit zum zusätzlichen Speichern von vorgegebenen oder vorbestimmten Daten, Informationen und/oder Signalen.

### Kurze Beschreibung der Zeichnungen

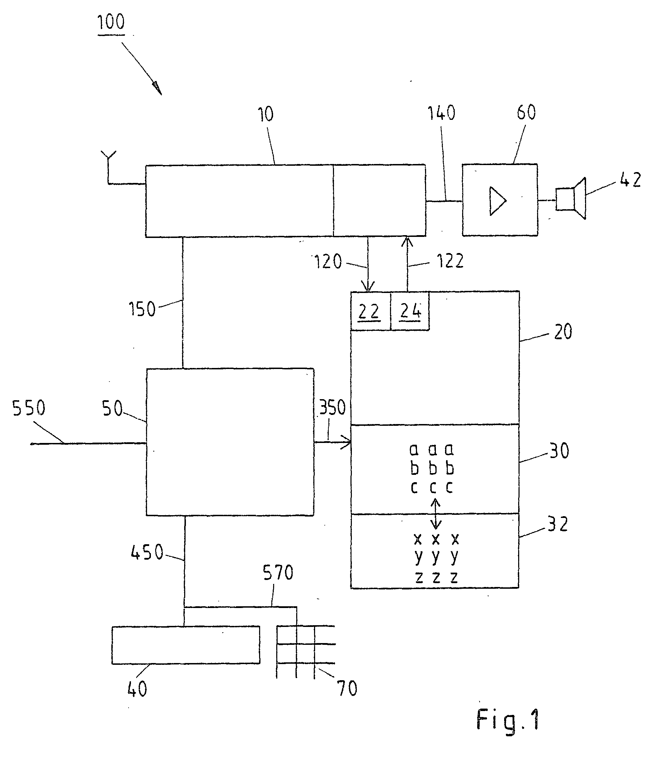

Weitere Ausgestaltungen, Merkmale und Vorteile der vorliegenden Erfindung werden nachstehend anhand des durch die Figur 1 veranschaulichten Ausführungsbeispiels näher erläutert.

Es zeigt:
- Fig. 1: ein Blockschaltbild eines Ausführungsbeispiels einer Vorrichtung gemäß der vorliegenden Erfindung.

### Bester Weg zur Ausführung der Erfindung

Bei dem anhand Figur 1 veranschaulichten Ausführungsbeispiel handelt es sich um eine Vorrichtung 100 zum Empfangen, Aufzeichnen, Abspeichern und Wiedergeben von insbesondere auf den Straßenverkehr bezogenen Informationen und/oder Zusatzinformationen in Form von Daten aaa, Informationen bbb und Signalen ccc. Diese Vorrichtung 100 ist im (in Figur 1 aus Gründen der Übersichtlichkeit der Darstellung nicht explizit gezeigten) Innenraum, nämlich im Armaturenbrett eines Kraftfahrzeugs, als Kommunikationseinrichtung in Form eines Navigationssystems mit integrierter Autoradiofunktion im Autoradio oder als Modul eines dezentralen Gerätekonzeptes im Armaturenbrett integriert sein..

Die auf den Straßenverkehr bezogenen Daten aaa, Informationen bbb und Signale ccc kommen hierbei von externen Quellen, nämlich von Rundfunksendern. Diese Rundfunksender übertragen vor allem Verkehrsmeldungen über ihre RDS-Sender (RDS = Radio Data System = Radio-Daten-System) kodiert im RDS/TMC-Standard (TMC = Traffic Message Channel = Kanal für Verkehrsdurchsagen = Verkehrsfunkkanal mit automatisierter Erfassung der Verkehrslage und Aufbereitung entsprechender Verkehrsmeldungen) oder analog.

Um nun diese aktuellen Nachrichten (= Daten aaa, Informationen bbb und Signale ccc) empfangen zu können, weist die Vorrichtung 100 eine Empfangseinheit 10 auf. Die Aufzeichnung der Verkehrsmeldungen (= Daten aaa, Informationen bbb und Signale ccc) erfolgt parallel zum laufenden Programm oder auch im sogenannten "stand by"-Betrieb der Vorrichtung 100 mittels einer mit der Empfangseinheit 10 in bidirektionaler Verbindung 120, 122 stehenden Aufzeichnungseinheit 20 zum Aufzeichnen der empfangenen Daten aaa, Informationen bbb und Signale ccc.

Zu berücksichtigen ist in bezug auf den Aufbau, die Funktion und die Wirkungsweise der in Figur 1 dargestellten Vorrichtung 100, daß die Verkehrsnachrichten sowohl analog als auch digital vorliegen können.

Für den Fall, daß die Verkehrsnachrichten nun analogen Ursprungs sind, werden diese analogen Verkehrsnachrichten eingangs der Aufzeichnungseinheit 20 mittels eines A(nalog)-D(igital)-Wandlers 22 digitalisiert und im ersten, mit der Aufzeichnungseinheit 20 unmittelbar in Verbindung stehenden digitalen Halbleiter-Speichermodul 30 abgelegt. Die Wiedergabe dieser abgespeicherten aktuellen Daten aaa, Informationen bbb und Signale ccc erfolgt dann nach entsprechender D(igital)-A(nalog)-Wandlung, das heißt nach Durchlaufen eines ausgangs der Aufzeichnungseinheit 20 angeordneten D(igital)-A(nalog)-Wandlers 22.

Werden die Verkehrsnachrichten hingegen von vornherein digital übertragen, so werden sie direkt, das heißt ohne A(nalog)-D(igital)-Wandlung in Form von ASCII-Zeichen (ASCII = American Standard Code for Information Interchange) im digitalen Halbleiter-Speichermodul 30 abgelegt.

Diese Informationen können sowohl in einer zum optischen Wiedergeben der aus der ersten Speichereinheit 30 ausgelesenen Daten aaa, Informationen bbb und Signale ccc bestimmten Displayeinheit 40 angezeigt als auch nach einer Wandlung mittels eines mit dem Empfänger in Verbindung 140 stehenden, eine Verstärkerfunktion aufweisenden Akustikwandlers 60 über die Niederfrequenz (--> Frequenzbereich von etwa zehn Hertz bis etwa zwanzig Kilohertz) wiedergegeben werden; hierzu ist eine mit der Aufzeichnungseinheit 20 in Verbindung 122, 140 stehende Sprachwiedergabeeinheit 42 vorgesehen.

Das Ausführungsbeispiel gemäß Figur 1 zeichnet sich des weiteren dadurch aus, daß neben dem ersten Speicherbereich 30 ein zweites Speicherbereiches 32 zum Speichern von vorgegebenen oder vorbestimmten Daten xxx, Informationen yyy und Signalen zzz vorgesehen ist. Hierbei umfaßt das Ausführungsbeispiel gemäß Figur 1 auch die erfindungswesentliche Variante, bei der der Speicherinhalt der vorhandenen Speichereinheit 30, 32 so groß gewählt wird, daß neben der "aktuellen" Aufzeichnungskapazität 30 (--> Daten aaa + Informationen bbb + Signale ccc) ausreichend Platz 32 für die vorgegebenen oder vorbestimmten Daten xxx, Informationen yyy und Signale zzz zur Verfügung steht.

Diese vorgegebenen oder vorbestimmten Daten xxx, Informationen yyy und Signale zzz sind in Form von Anweisungen, Begrüßungen, Fixtexten, Hinweisen, Warnungen, Wunschtexten oder dergleichen zusätzlich zu den aktuell empfangenen und aufgezeichneten Daten aaa, Informationen bbb und Signalen ccc abgelegt und können ebenso abgerufen werden, nämlich aus dem zweiten Speicherbereich 32.

Die Daten für diese vorgegebenen oder vorbestimmten Anweisungen, Begrüßungen, Fixtexte, Hinweise, Warnungen, Wunschtexte oder dergleichen können in erfindungswesentlicher Weise im Zuge einer sogenannten "start up"-Programmierung (bereits werksseitig bei Fertigung) oder im Service (im Laufe der Zeit auf Kundenwunsch) im zweiten Speicherbereich 32 gespeichert werden.

Wiedergebbar sind diese vorgegebenen oder vorbestimmten Daten xxx, Informationen yyy und Signale zzz situationsbedingt, ursachenbedingt und in Abhängigkeit von auf den Straßenverkehr bezogenen Ereignissen oder mittels Nachrichtenkatalog abrufbar ebenfalls mittels der Wiedergabeeinheiten 40, 42, das heißt sowohl mittels der optischen Displayeinheit 40 als auch mittels der akustischen Sprachwiedergabeeinheit 42.

Für Testzwecke und/oder für Kennenlernzwecke können die vorgegebenen oder vorbestimmten Daten xxx, Informationen yyy und Signale zzz sowohl auf der Anzeige- oder Displayeinheit 40 in "Message"-Listenform als auch mittels der Sprachwiedergabeeinheit 42 in "Message"-Aufzählungsform wiedergegeben werden. Hierbei ist über ein benutzerspezifisches Eingeben mittels einer im Innenraum, speziell im Cockpitmodul, des Kraftfahrzeugs angeordneten Bedieneinheit 70 auch eine individuelle Wahl der vorgegebenen oder vorbestimmten Daten xxx, Informationen yyy und Signale zzz möglich, etwa im Wege einer Begrüßung des Führers des Kraftfahrzeugs beim Öffnen desselben.

Sowohl der erste Speicher 30 als auch der zweite Speicher 32 sind jeweils auch als Sprachspeichereinheit, nämlich als sogenanntes TIM-Modul (TIM = Traffic Information Memory) implementiert, wobei die Daten [aaa <--> xxx], Informationen [bbb <--> yyy] und Signale [ccc <--> zzz] bei Bedarf zwischen dem ersten Speichermodul 30 und dem zweiten Speichermodul 32 dynamisch ausgetauscht werden können, wie durch den Doppelpfeil zwischen dem ersten Speichermodul 30 und dem zweiten Speichermodul 32 in Figur 1 angedeutet ist.

Die Selektion, das Auslesen und das Ausgeben der Fixtexte (zum Beispiel "bitte Code eingeben", "Changer nicht betriebsbereit", "kein Empfang", "unvollständige Nachricht" [bezogen auf TIM-Aufzeichnung], ...) werden in Abhängigkeit von der Ursache für die Selektion und Ausgabe oder durch vorstehend beschriebenes MMI (= Man Machine Interface = Bedieneinheit 70 in Kombination mit den Wiedergabeeinheiten 40, 42) mittels einer Steuereinheit 50 (= Main-µC = "Haupt-Mikroprozessorschaltung") gesteuert. Der Hauptprozessor dient als Steuereinheit zur Gerätesteuerung. Er unterscheidet sich von anderen Prozessoren, die Teilfunktionen kontrollieren und ihrerseits vom Hauptprozessor gesteuert werden. Die Steuereinheit 50 ist nicht nur über einen Datenbus 150 an die Empfangseinheit 10 angeschlossen, sondern steht auch
- mit den Sprach-Speichermodulen 30, 32 in Verbindung 350,
- mit der optischen Wiedergabeeinheit 40 in Verbindung 450 sowie
- mit der Bedieneinheit 70 in Verbindung 450, 570,
- durch einen externen Bus mit peripheren Modulen in Verbindung.

## Patentansprüche

1. Vorrichtung (100) zum Empfangen, Aufzeichnen, Abspeichern und Wiedergeben von insbesondere auf den Straßenverkehr bezogenen Informationen und/oder Zusatzinformationen in Form von Daten (aaa), Informationen (bbb) und/oder Signalen (ccc), aufweisend
- mindestens eine Empfangseinheit (10) zum Empfangen der Daten (aaa), Informationen (bbb) und/oder Signale (ccc),
- mindestens eine mit der Empfangseinheit (10) in Verbindung (120, 122) stehende Aufzeichnungseinheit (20) zum Aufzeichnen der empfangenen Daten (aaa), Informationen (bbb) und/oder Signale (ccc),
- mindestens eine mit der Aufzeichnungseinheit (20) in Verbindung stehende Speichereinheit (30, 32) zum Abspeichern der aufgezeichneten Daten (aaa), Informationen (bbb) und/oder Signale (ccc),
- mindestens eine mit der Aufzeichnungseinheit (20) in Verbindung (122, 140) stehende Wiedergabeeinheit (40, 42) zum Wiedergeben der aus der Speichereinheit (30, 32) ausgelesenen Daten (aaa), Informationen (bbb) und/oder Signale (ccc) und
- mindestens eine mit der Empfangseinheit (10) bzw. mit der Wiedergabeeinheit (40, 42) in Verbindung (150 bzw. 450) stehende Steuereinheit (50) zum Steuern des Empfangens, Aufzeichnens, Abspeicherns und Wiedergebens der Daten (aaa), Informationen (bbb) und/oder Signale (ccc),
**dadurch gekennzeichnet,**
**daß** die Speichereinheit (30, 32) zumindest bereichsweise oder zumindest teilweise für das Speichern von vorgegebenen oder vorbestimmten Daten (xxx), Informationen (yyy) und/oder Signalen (zzz) ausgelegt ist, die zusätzlich zu den empfangenen und aufgezeichneten Daten (aaa), Informationen (bbb) und/oder Signalen (ccc) aus der Speichereinheit (30, 32) abrufbar sind.

2. Vorrichtung gemäß Anspruch 1, **dadurch gekennzeichnet, daß** es sich bei den vorgegebenen oder vorbestimmten Daten (xxx), Informationen (yyy) und/oder Signalen (zzz) um mindestens eine Anweisung,'um mindestens eine Begrüßung, um mindestens einen Fixtext, um mindestens einen Hinweis, um mindestens eine Warnung, um mindestens einen Wunschtext oder um dergleichen handelt.

3. Vorrichtung gemäß Anspruch 1 oder 2, **dadurch gekennzeichnet, daß** die Speichereinheit (30, 32) als mindestens eine Sprachspeichereinheit, insbesondere als mindestens ein Sprachwiedergabe Modul, ausgebildet ist.

4. Vorrichtung gemäß mindestens einem der Ansprüche 1 bis 3, **dadurch gekennzeichnet, daß** die Speichereinheit (30, 32) modular aufgebaut ist, wobei
- mindestens ein erster flexibler Speicherbereich (30) zum Abspeichern der empfangenen und aufgezeichneten Daten (aaa), Informationen (bbb) und/oder Signale (ccc) und
- mindestens ein zweiter flexibler Speicherbereich (32) zum Abspeichern der vorgegebenen oder vorbestimmten Daten (xxx), Informationen (yyy) und/oder Signale (zzz) vorgesehen ist.

5. Vorrichtung gemäß Anspruch 4, **dadurch gekennzeichnet, daß** zwischen dem ersten Speicherbereich (30) und dem zweiten Speicherbereich (32) Daten (aaa <--> xxx), Informationen (bbb <--> yyy) und/oder Signale (ccc <--> zzz) austauschbar sind.

6. Vorrichtung gemäß mindestens einem der Ansprüche 1 bis 5, **dadurch gekennzeichnet, daß** die vorgegebenen oder vorbestimmten Daten (xxx), Informationen (yyy) und/oder Signale (zzz) situationsbedingt und/oder ursachenbedingt und/oder in Abhängigkeit von auf den Straßenverkehr bezogenen Ereignissen wiedergebbar sind.

7. Vorrichtung gemäß mindestens einem der Ansprüche 1 bis 6, **dadurch gekennzeichnet, daß** die vorgegebenen oder vorbestimmten Daten (xxx), Informationen (yyy) und/oder Signale (zzz) benutzerspezifisch wählbar und/oder benutzerspezifisch wiedergebbar sind.

8. Vorrichtung gemäß mindestens einem der Ansprüche 1 bis 7, **dadurch gekennzeichnet, daß** die Wiedergabeeinheit (40, 42)
- mindestens eine Anzeige- oder Displayeinheit (40) zum optischen Wiedergeben der Daten (aaa, xxx), Informationen (bbb, yyy) und/oder Signale (ccc, zzz) und/oder
- mindestens eine Sprachwiedergabeeinheit (42) zum akustischen Wiedergeben der Daten (aaa, xxx), Informationen (bbb, yyy) und/oder Signale (ccc, zzz) aufweist.

9. Vorrichtung gemäß Anspruch 8, **dadurch gekennzeichnet, daß** die vorgegebenen oder vorbestimmten Daten (xxx), Informationen (yyy) und/oder Signale (zzz)
- auf der Anzeige- oder Displayeinheit (40) in Listenform und/oder
- mittels der Sprachwiedergabeeinheit (42) in Aufzählungsform wiedergebbar sind.

10. Vorrichtung gemäß mindestens einem der Ansprüche 1 bis 9, **dadurch gekennzeichnet, dass** vorbestimmte Daten (aaa), Informationen (bbb) und/oder Signale (ccc) herstellerseitig, kundenbezogen vom Service oder busgesteuert (automatisch) speicherbar sind.

11. Verwendung von zumindest Bereichen oder Teilen (32) mindestens einer einer Vorrichtung (100) zum Empfangen, Aufzeichnen, Abspeichern und Wiedergeben von auf den Straßenverkehr bezogenen Daten (aaa), Informationen (bbb) und/oder Signalen (ccc) zugeordneten Speichereinheit (30, 32) zum zusätzlichen Speichern von vorgegebenen oder vorbestimmten Daten (xxx), Informationen (yyy) und/oder Signalen (zzz).
